# EUROPEAN PATENT APPLICATION

(11) **EP 1 202 039 A1**
(43) Date of publication of application: **02.05.2002**
(21) Application number: 01118330.8
(22) Date of filing: 27.07.2001
(51) Int. Cl.: G01M 11/00

(54) **Calibration and/or verification of a measurement setup**

(71) Applicant: Agilent Technologies, Inc. (a Delaware corporation), Palo Alto, CA 94303 (US)
(72) Inventor: Ziegler, Patrick, 71034 Boeblingen (DE); Stolte, Ralf, 21147 Hamburg (DE)
(74) Representative: Barth, Daniel

(57) **Abstract**

The present invention relates to calibration and verification of a measurement setup for determination of optical properties, e.g. polarization dependent loss (PDL), polarization mode dispersion (PMD), differential group delay (DGD), insertion loss, return loss and/or chromatic dispersion (CD), of a device under test (DUT) in transmission and in reflection of an optical beam. The invention is disclosing an element that is at least partly transmissive and at least partly reflective.

## Description

### BACKGROUND OF THE INVENTION

The present invention relates to calibration and/or verification of a measurement setup for determination of optical properties, e.g. polarization dependent loss (PDL), polarization mode dispersion (PMD), differential group delay (DGD), insertion loss, return loss and/or chromatic dispersion (CD), of a device under test (DUT) in transmission and in reflection of an optical beam.

Measurement setups for the above-mentioned purpose shall be as easy to handle as possible and shall reveal all optical properties of the DUT as fast as possible and with as little handling as possible. This means that the DUT should be fully characterized to all parameters required when it is once connected to the measurement setup. For a full characterization it is required to measure all parameters in transmission and in reflection. This can be done for example by a measurement setup described in a parallel patent application of the applicant of the same day, which is incorporated herein by reference.

However, the above requirements also mean that the calibration and/or the verification of the measurement setup should be as easy and as fast as the measurement itself.

### SUMMARY OF THE INVENTION

It is an object of the invention to provide improved calibration and/or verification of a measurement setup for determination of optical properties of a DUT in transmission and in reflection of an optical beam. The object is solved by the independent claims.

An advantage of the present invention is the provision of a fast way to calibrate and/or verify a measurement setup of the above-mentioned art in transmission and in reflection, simultaneously. To the knowledge of the inventors, calibration and/or verification of a measurement setup of the above-mentioned art simultaneously in transmission and in reflection has not been reported so far. In other words the invention provides the first time a possibility to calibrate and/or verify a measurement setup of the above-mentioned art in one go.

In a preferred embodiment of the invention the inventive element comprises a semi-transparent mirror. This embodiment is easy to fabricate, easy to handle and cheap in production costs.

In a further preferred embodiment of the invention the element has a known proportion of transmission and reflection, more preferred also known optical properties, e.g. PDL, PMD, DGD, insertion loss, return loss, CD. Especially for the measurement of PDL it is preferred to have an element with known PDL for calibration of the measurement setup. However, it is advantageous to have an element with known optical properties for verification, also, although this is not necessary for verification. Therefore, for verification of a measurement setup it is also possible to use an element that has substantially no PMD, DGD, insertion loss, return loss, PDL and CD in the relevant wavelength range.

It is further preferred that the element is prepared in such a way that the optical properties can be adjusted. This embodiment guarantees a maximum of flexibility when using the inventive element.

In another preferred embodiment of the invention the element comprises a first beam splitter or coupler in an initial path of the beam for coupling out at least a part of the beam into a first path, an optical guide for guiding the part of the beam partly back into the initial path in reverse direction, the guide preferably comprising a second beam splitter or coupler in the first path for coupling the part of the beam back into the initial path. This embodiment realizes the invention without the necessity of using a semi-transparent mirror.

In another preferred embodiment of the invention the element comprises a first beam splitter or coupler in an initial part of the beam for coupling out at least part of the beam into a first path, a mirror in the first path for reflecting back the part of the beam to the first beam splitter so that the first beam splitter partly guides the part back into the initial path in reverse direction and partly into a second path guiding the reflected signal in the initial direction.

Other preferred embodiments are shown by the dependent claims.

It is clear that the invention can be partly or entirely embodied or supported by one or more suitable software programs, which can be stored on or otherwise provided by any kind of data carrier, and which might be executed in or by any suitable data processing unit.

### BRIEF DESCRIPTION OF THE DRAWINGS

Other objects and many of the attendant advantages of the present invention will be readily appreciated and become better understood by reference to the following detailed description when considering in connection with the accompanied drawings. The components in the drawings are not necessarily to scale, emphasis instead being placed upon clearly illustrating the principles of the present invention. Features that are substantially or functionally equal or similar will be referred to with the same reference sign(s).
- Fig. 1: shows a principle of an embodiment of the inventive;
- Fig.2: shows a first embodiment of the element of the present inventions;
- Fig.3: shows a second embodiment of the element of the present inventions; and
- Fig. 4: shows a third embodiment of the element of the present invention.

### DETAILED DESCRIPTION OF THE INVENTION

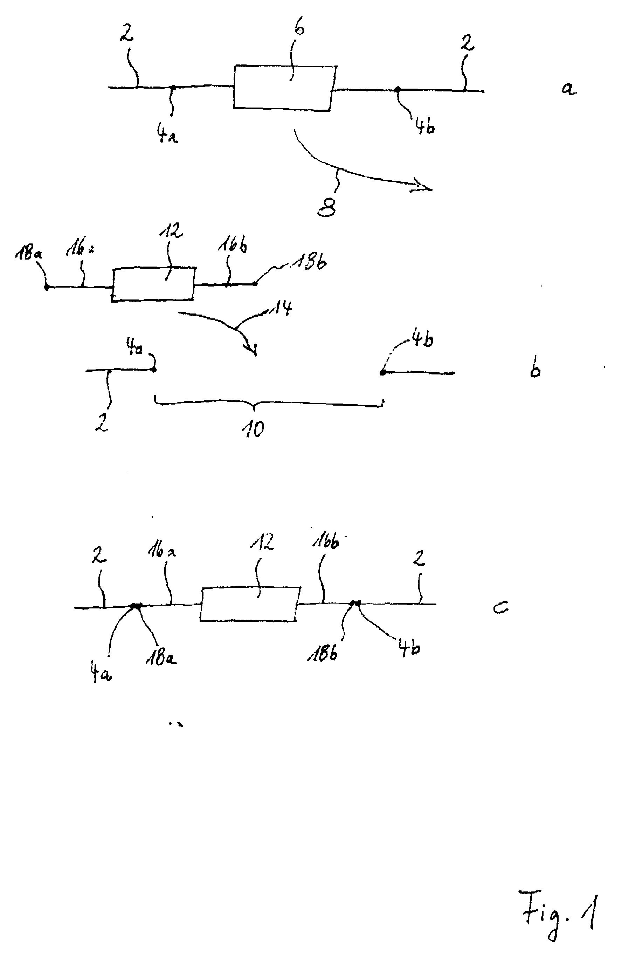

Referring now in greater detail to the drawings, Fig. 1 shows schematically a principle of an embodiment of the inventive method. In step a of Fig. 1 it is shown the measurement arm 2 of a (not shown) measurement setup for determination of optical properties of a DUT 6 in transmission and in reflection. Such a measurement setup is for example disclosed in the above-mentioned parallel patent application of the applicant of the same day. Therefore, the description of the measurement setup given in the parallel application is incorporated herein by reference. The measurement arm has two connectors 4a and 4b. Between the two connectors 4a and 4b the DUT 6 is inserted. By releasing the connection at the connectors 4a and 4b (indicated by the arrow 8) it is possible to disconnect the DUT 6 from the measurement arm 2. This, as shown in step b of Fig. 1, opens a gap 10 between the connectors 4a and 4b. This makes it possible to insert an inventive element 12 into the gap 10 (indicated by arrow 14). For this purpose the element 12 is prepared with two short patch-cords 16a and 16b which patch-cords have connectors 18a and 18b which connectors can be connected to the connectors 4a and 4b of the measurement arm 2, respectively. As shown in step c of Fig. 1, as a result the inventive element 12 is inserted in the measurement arm 2 and has replaced the DUT 6.

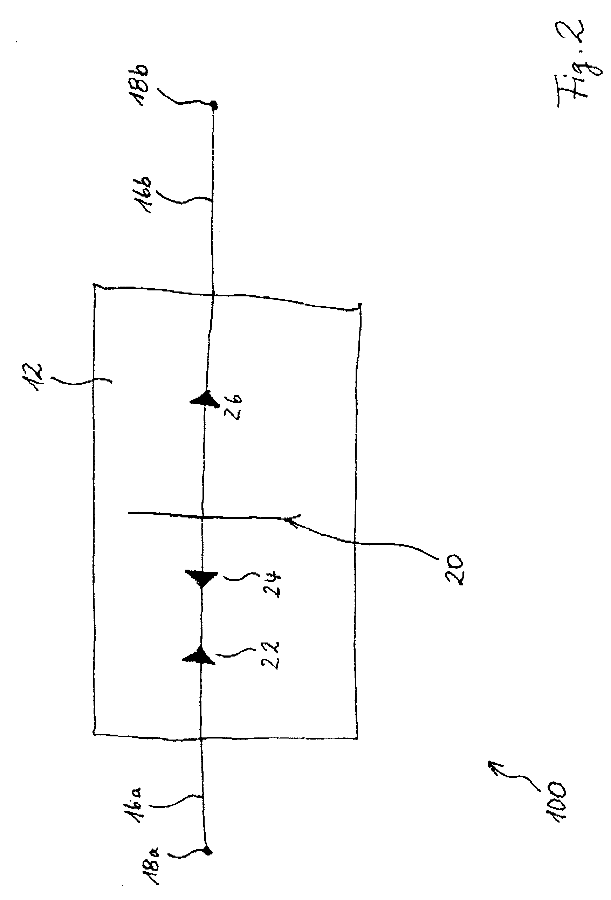

Fig. 2 shows a first embodiment 100 of the inventive element 12. In embodiment 100 the inventive element 12, comprises a semi-transparent mirror 20. The semi-transparent mirror 20 reflects 50% of light as indicated by a triangle 22 and guided by the patch-cord 16a to the mirror 20 back into the patch-cord 16a as indicated by 24 and lets 50% of the light 22 travel through the mirror 20 as indicated by triangle 26 which light travels along the patch-cord 16b to the connector 18b. Therefore, the element according to Fig. 2 provides transmission and reflection of the incoming light 22. However, different ratios of transmission and reflection can be used.

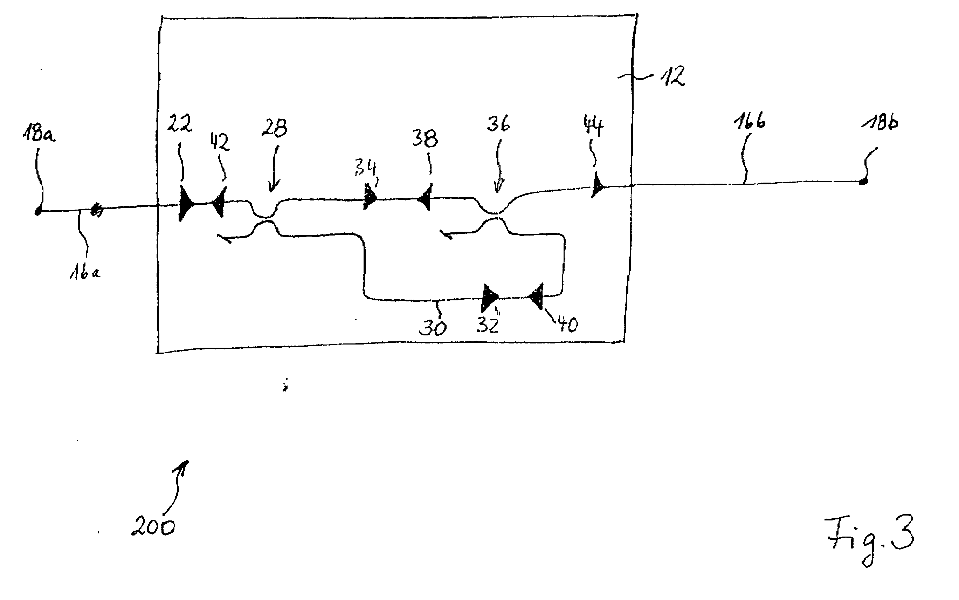

Fig. 3 shows a second embodiment 200 of the inventive element 12 of the present invention. Element 12 of embodiment 200 comprises a first coupler 28, which is preferably a 3dB coupler. However, other couplers, as 10dB coupler, can be used, also. Coupler 28 lies in the initial path provided by patch-cord 16a of the incoming light 22. The coupler 28 couples out 50% of the light 22 into a first path 30, the part coupled out being indicated by a triangle 32. The other 50% part as indicated by triangle 34 travels along the initial path 16a. Furthermore, element 12 comprises a second beam splitter 36 which couples part 32 partly back into the initial path 16a in reverse direction as indicated by triangle 38. Additionally, the second coupler 36 couples the light 34 into the first path 30 as indicated by triangle 40. Light 40 is partly coupled back into the initial path 16a in reverse direction with the first coupler 28 as indicated by triangle 42. The part of the light 34 not coupled out of the initial path 16a by the second coupler 36 travels along the patch-cord 16b to the connector 18b as indicated by triangle 44. Therefore, the element 12 in the embodiment 200 of Fig. 3 provides a part 44 of the incoming light 22 in transmission at the connector 18b and a part 42 of the incoming light 22 in reflection at the connector 18a for calibration and/or verification.

Furthermore, by adjusting the couplers 28 and 36, e.g. by using 10dB couplers or other couplers, it is possible to adjust the ratio of reflected light 42 to transmitted light 44.

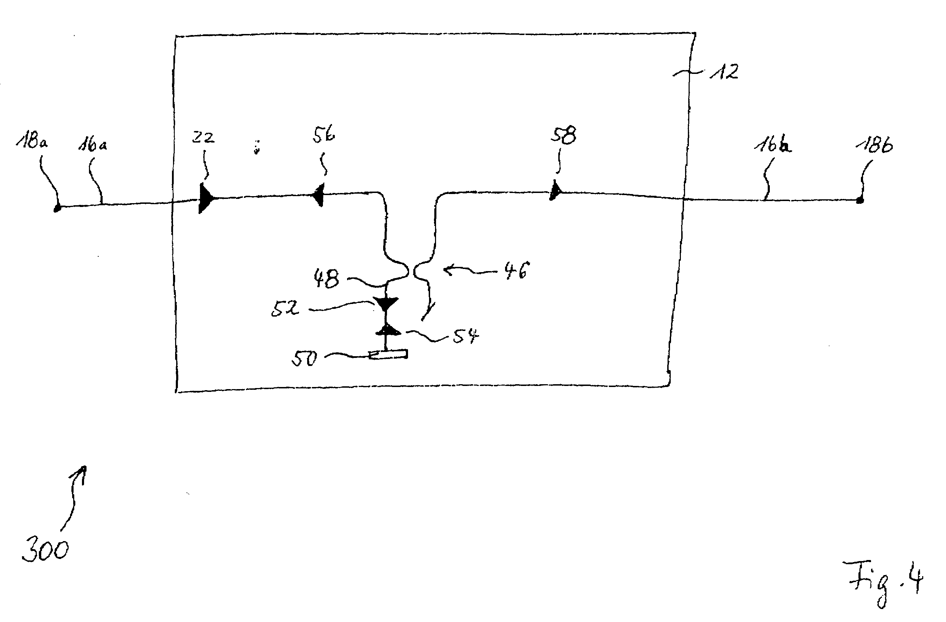

Fig. 4 shows a third embodiment 300 of the inventive element 12 of the present invention. In embodiment 300 the incoming light 22 is partly coupled out by a coupler 46 into a first path 48 as indicated by triangle 52. At the end of the first path 48 there is provided a mirror 50. Mirror 50 reflects the light 52 in total as indicated by triangle 54. Subsequently, coupler 46 couples the reflected light 54 into the initial path 16a in reverse direction as indicated by triangle 56 and into the patch-cord 16b in a direction to the connector 18b as indicated by triangle 58. Therefore, the element 12 according to the embodiment 300 of Fig. 4 provides a part 58 of the incoming light 22 in transmission at the connector 18b and a part 56 of the incoming light 22 in reflection at the connector 18a.

## Claims

1. An element for calibration and/or verification of a measurement setup for determination of optical properties of a device under test (6) in transmission and in reflection of an optical beam (22),
the element (12) being at least partly transmissive and at least partly reflective.

2. The element of claim 1,
having a known proportion of transmission and reflection.

3. The element of any one of the claims 1 or 2,
having at least one known optical property, the optical property being at least one out of the group of PDL, PMD, DGD, insertion loss, return loss, CD.

4. The element of claim 3,
comprising at least one sub-element (20, 28, 30, 36, 46, 48, 50) to adjust the at least one optical property.

5. The element of any one of the claims1-4,
comprising a semi-transparent mirror (20).

6. The element of any one of the claims 1-5,
comprising a first beam splitter or coupler (28) to be connected to an initial path (16a) of the beam (22) for coupling out at least a part (32) of the beam (22) into a first path (30), an optical guide (30, 36) for guiding the part (32) of the beam (22) at least partly (38) back into the initial path (16a) in reverse direction.

7. The element of claim 6,
the guide (30, 36) comprising a second beam splitter or coupler (36) to be connected to the first path (30) and to the initial path (16a) for coupling the part (32) of the beam (22) back into the initial path (16a).

8. The element of any one of the claims 1-7,
comprising a first beam splitter or coupler (46) to be connected to an initial path (16a) of the beam (22) for coupling out at least a part (52) of the beam (22) into a first path (48), a mirror (20) at the end of the first path (48) to reflect the part (54) of the beam (22) back into the beam splitter or coupler (46) for coupling back a part (56) of the part (52) into the initial path (16a) in reverse direction and the other part (58) of the part (52) into a second path (16b) to provide part (58) of the beam (22) in transmission.

9. A method for calibration and/or verification of a measurement setup for determination of optical properties of a device under test (6) in transmission and in reflection of an optical beam (22),
comprising the steps of:
- replacing the device under test (6) by an element (12) according to any one of the claims 1-8,
- performing a run of the measurement setup to gain data in transmission and in reflection,
- analyzing the data to calibrate and/or verify the measurement setup in transmission and in reflection.

10. A software program or product, preferably stored on a data carrier, for executing the method of claim 9 when run on a data processing system such as a computer.
